(19) Europäisches Patentamt
European Patent Office
Office européen des brevets

(11) **EP 2 522 612 B1**

(12) **EUROPÄISCHE PATENTSCHRIFT**

(45) Veröffentlichungstag und Bekanntmachung des Hinweises auf die Patenterteilung:
**25.02.2015 Patentblatt 2015/09**

(51) Int Cl.:
***B66B 1/30*** *(2006.01)*

(21) Anmeldenummer: **12167212.5**

(22) Anmeldetag: **09.05.2012**

(54) **Verfahren und Vorrichtung zum Steuern einer Aufzugsanlage**

Method and device for controlling a lift assembly

Procédé et dispositif destinés à la commande d'une installation de levage

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **12.05.2011 DE 102011101860**

(43) Veröffentlichungstag der Anmeldung:
**14.11.2012 Patentblatt 2012/46**

(73) Patentinhaber: **ThyssenKrupp Aufzugswerke GmbH**
**73765 Neuhausen a.d.F. (DE)**

(72) Erfinder: **Pletschen, Ingo**
**70794 Filderstadt (DE)**

(74) Vertreter: **ThyssenKrupp AG - IP Services**
**ThyssenKrupp Allee 1**
**45143 Essen (DE)**

(56) Entgegenhaltungen:
**WO-A1-2010/055555    US-A- 4 940 117**
**US-A- 5 531 294**

**Beschreibung**

Die vorliegende Erfindung betrifft ein Verfahren zum Einstellen eines Regelkreises für einen Antrieb einer Aufzugsanlage, insbesondere für einen Elektromotorantrieb, wobei der Regelkreis einen Antriebsregelkreis und eine Vorsteuerung aufweist, die einen Vorsteuerungssollwert für den Antriebsregelkreis vorgibt.

Bei der Steuerung von Aufzugsanlagen sind verschiedene Anforderungen zu erfüllen. Zum einen ist zumindest im Bereich von Haltestellen eine hohe Positionsgenauigkeit erforderlich, damit am Übergang zwischen Fahrkorb und Fahrschachttür keine Stufe entsteht. Ferner wird üblicherweise gefordert, dass der Fahrkorb mit einer möglichst hohen Geschwindigkeit zwischen den Haltestellen bewegt wird, um die Wartezeiten für Fahrgäste zu minimieren. Schließlich ist auch der Komfort der Antriebssteuerung von hoher Bedeutung. Insbesondere wird generell gefordert, dass das Anfahren und das Abbremsen möglichst ruckfrei erfolgen sollen. Darüber hinaus sind bei der Steuerung von Aufzugsanlagen hohe Sicherheitsanforderungen zu erfüllen, die jedoch im Rahmen der vorliegenden Anmeldung nicht näher betrachtet werden.

Der Antrieb einer Aufzugsanlage stellt üblicherweise eine Kraft oder ein Drehmoment bereit. Im Falle einer Treibscheiben-Aufzugsanlage wird die Treibscheibe zum Antreiben des Fahrkorbes generell mittels eines elektrischen Motors angetrieben. Der Elektromotor muss dabei in der Regel mehrere Drehmoment-Komponenten bereitstellen. Eine Drehmoment-Komponente ist typischerweise die so genannte Lastdifferenz, die hervorgerufen wird durch die Differenz zwischen dem - beladenen oder unbeladenen - Fahrkorb und einem Gegengewicht. Die Lastdifferenz ist während einer Aufzugsfahrt von einer Haltestelle zur nächsten Haltestelle konstant. Die zweite Komponente ist bei Treibscheiben-Aufzugsanlagen generell die durch die Seilmassen auf der Fahrkorbseite einerseits und der Gegengewichtsseite andererseits hervorgerufene Seillastdifferenz. Die Seillastdifferenz ist in der Regel positionsabhängig. Die dritte Komponente ist das zum Beschleunigen und Abbremsen bereitzustellende Drehmoment.

Die bei unterschiedlichen Aufzugfahrten durchzuführenden Regelungen sind dem Grunde nach immer ähnlich und unterscheiden sich im Wesentlichen durch die Beladung des Fahrkorbes und die jeweilige absolute Position des Fahrkorbes. Um das Führungsverhalten der Regelung zu verbessern, ist es bekannt, den Regelkreis mit einer Vorsteuerung zu beaufschlagen. Die Vorsteuerung kann dabei den für eine jeweilige Aufzugfahrt zu erwartenden Stellgrößen-Bedarf berücksichtigen. Sofern die Vorsteuerung auch eine messbare Variable der Aufzugsanlage einbezieht, kann die Vorsteuerung nach der Art einer Störgrößenaufschaltung ausgelegt sein.

US-A-4,940,117 beschreibt ein Verfahren zum Abstimmen einer Steuereinheit für die Position eines Aufzugs. Gemäß dem Verfahren wird ein mathematisches Modell des Aufzugssystems berechnet und das Verhalten des Aufzugssystems simuliert. Dabei werden Steuerparameterwerte für einen PID-Regler ermittelt, die eine Abweichung zwischen Zielpositionswerten und der tatsächlichen Position des Aufzugs minimieren. Auf der Grundlage der optimierten Steuerparameterwerte wird ein tatsächliches Erregungssignal in das Aufzugssystem eingegeben. Um das Anfahren sanfter zu gestalten, wird die Last der Aufzugskabine gewogen und die daraus ermittelte Information zum tatsächlichen Erregungssignal in einer Summierschaltung addiert.

Aus dem Dokument US-A-4,754,850 ist es bspw. bekannt, in einen Drehzahlregelkreis für eine Aufzugsanlage ein Störgrößensignal in Form eines Lastkompensationssignals aufzuschalten, mittels dessen ein von einer Bremse beaufschlagtes Bremsdrehmoment berücksichtigt wird, das gemessen wird. Hierdurch soll ein schnellerer und sanfterer Anlauf des Fahrkorbes aus einem Zustand heraus ermöglicht werden, bei dem der Fahrkorb mittels einer Bremse gehalten und anschließend, nach Lösen der Bremse, beschleunigt wird.

Ferner ist es aus dem Dokument US-A-4,380,275 bekannt, eine Lastvorsteuerung in einem analogen Drehzahlregelkreis vorzusehen.

Das Dokument US 4,793,442 offenbart, eine Last des Fahrkorbes zu messen und einem Aufzugsantrieb ein elektrisches Signal vor dem Anfahren zuzuführen, das dem erforderlichen Lastdrehmoment entspricht, so dass beim Lösen der Bremse kein Ruck entsteht. Zum Einlernen eines Zusammenhanges zwischen einer jeweiligen Last und einem zur Kompensation dieser Last erforderlichen Drehmoment wird eine Routine durchgeführt, bei der ein voraussichtliches Drehmoment eingestellt wird und dann in Abhängigkeit davon, ob sich der Fahrkorb bewegt, das Drehmoment inkrementell erhöht oder verringert wird, bis der Fahrkorb stationär verbleibt. Dieser Schritt ist für einige Stockwerke separat durchzuführen, wobei der Fahrkorb jeweils vor dem Durchführen dieser Routine in die jeweilige Position zu fahren ist. Der Einlernprozess ist daher überwiegend von manueller Tätigkeit geprägt und sehr zeitaufwändig.

Es ist ferner bekannt (US-A-4,623,041), bei einer Aufzugsanlage eine Lastmesseinrichtung vorzusehen, die einer Steuereinrichtung drei unterschiedliche Signale liefert, wobei die Last direkt unter Verwendung eines Phasenwinkels zwischen einem Strom und einer Spannung für einen Drehfeldmotor des Aufzugs gemessen wird.

Ferner offenbart das Dokument US-A-4,939,679 ein Verfahren zur Lastmessung in einer Aufzugsanlage, wobei wiederum ein Regelverstärkungswert in Abhängigkeit von Messungen im stationären Zustand eingestellt wird, indem festgestellt wird, bei welchem Drehmoment der Fahrkorb gehalten werden kann, ohne sich auf und ab zu bewegen ("roll back").

Eine Lastmesseinrichtung zum Messen der Last eines Fahrkorbes ist aus dem Dokument US-A-5,172,782 bekannt.

In dem Dokument US-A-5,343,003 wird ein Verfahren zum Kalibrieren eines A/D-Wandlers innerhalb eines Lastmesssystems einer Aufzugsanlage beschrieben, das ebenfalls im stationären Zustand des Fahrkorbes durchgeführt wird und nach der Art einer Waagenkalibrierung durchgeführt wird.

Eine Vorsteuerung für den Regelkreis einer Aufzugsanlage ist ferner aus dem Dokument US-A-5,531,294 bekannt, wobei eine Einstellung dadurch erfolgt, dass in einer bestimmten Fahrkorbposition das notwendige Haltemoment mit leerem und mit vollständig beladenem Fahrkorb ermittelt wird.

Aus der Schrift EP 0 936 730 A2 ist ein Verfahren zur Einstellung einer Steuereinrichtung für einen feldorientiert geregelten Drehfeldmotor einer Aufzugsanlage bekannt, wobei aus verschiedenen Reglerparametern ein Systemträgheitsparameter für den Motorregler berechnet wird. Dabei wird zunächst in Tests mit stehendem Fahrkorb eine Mehrzahl von Reglerparametern und ein Vorsteuerungs-Längsstrom bestimmt. In einem anschließenden Test mit fahrendem Fahrkorb erfolgt eine Feineinstellung bestimmter Reglerparameter und des Längsstromes.

Ähnliche Verfahren zum Einstellen eines Regelkreises sind bekannt aus den Dokumenten US-A-5,880,416 und US-A-5,929,400.

Aus dem Dokument US-A-5,157,228 ist ein Verfahren zum Überprüfen und automatischen Korrigieren von Signalen zum Steuern eines Aufzugssystems bekannt, wobei zunächst ein Drehmoment gestellt wird, mittels dessen der Fahrkorb bewegt wird. Anschließend werden Signale erfasst, die für die Bewegung charakteristisch sind. Nach einem Beendigen der Bewegung werden Vorzeichen der erfassten Signale mit einer Referenzsignaltabelle verglichen, und die Vorzeichen von ausgewählten erfassten Signalen werden automatisch geändert.

Bei einem weiteren dort beschriebenen Verfahren wird die Vorwärtsverstärkung eines Geschwindigkeitsreglers dadurch eingestellt, dass die Vorwärtsverstärkung zunächst auf einen ausgewählten Wert eingestellt wird, anschließend ein ausgewähltes Geschwindigkeitsprofil eingestellt wird. Die maximalen und minimalen Amplituden des Geschwindigkeitsreglerausgangs werden erfasst und es werden Differenzsignale erzeugt, wobei die Vorwärtsverstärkung automatisch eingestellt wird, um das Differenzsignal zu Null zu machen.

Es ist ferner bekannt (US-A-5,407,030), ein Lastmesssystem einer Aufzugsanlage unter Verwendung eines Motorstromes dynamisch zu rekalibrieren. Auch bekannt ist die automatische Kalibrierung einer Motordrehzahlregelschleife einer Aufzugssteuerung (US-A-5,880,416), wie bereits oben erwähnt.

Die Druckschrift EP 1 885 640 B1 offenbart ein Verfahren zur Ansteuerung eines Motors einer Aufzugsanlage, wobei ein Lastvorsteuerungssignal bereitgestellt wird. Ein Folgefehlersignal, das aus einer Differenz zwischen einem Geschwindigkeitssollsignal und einem erfassten Geschwindigkeitssignal abgeleitet wird, wird ebenfalls bereitgestellt. Ferner wird ein Lastmesssignal bereitgestellt. Zum Steuern und Einstellen des Vorsteuerungssignals werden wenigstens zwei Folgefehlersignale und wenigstens zwei sich hierauf beziehende Lastmesssignale über wenigstens zwei Fahrten des Fahrkorbes überwacht, wobei die überwachten Folgefehlersignale und die darauf bezogenen Lastmesssignale als Eingangssignale zum Steuern und Einstellen des Vorsteuerungs-Drehmomentsignals bereitgestellt werden. Über einen Einstellregulator wird ein Vorsteuerungsstrom iterativ eingestellt.

Bei den oben beschriebenen Verfahren ist es insbesondere bei der Inbetriebnahme einer Aufzugsanlage generell erforderlich, Parameter des Regelkreises einschließlich von Vorsteuerungsparametern von Hand einzustellen. Diese manuellen Einstellungen leiden daran, dass sie den spezifischen Eigenschaften einer in Betrieb zu nehmenden Aufzugsanlage nicht immer gerecht werden. Ferner ist es bei vielen dieser manuellen Einstellverfahren notwendig, einen Fahrkorb zu beladen, um Parameter des Regelkreises einzustellen.

Das Dokument EP 2 345 615 A1 (WO 2010/055555 A) offenbart eine Steuereinrichtung für eine Aufzugsanlage, bei der eine Modell-Berechnungseinheit ein Geschwindigkeitssollsignal erhält. Die Modell-Berechnurigseinheit berechnet ein Modell-Drehmoment, das einer Drehmomentberechnungseinheit eingegeben wird, sowie eine Modell-Geschwindigkeit. Die Modell-Geschwindigkeit wird einer Kompensations-Berechnungseinheit eingegeben, die auch ein Ist-Geschwindigkeitssignal erhält, und ein Fehler-Kompensationsdrehmoment berechnet, was ebenfalls der Drehmomentberechnungseinheit eingegeben wird. Die Modell-Berechnungseinheit berechnet die Modell-Größen auf der Grundlage eines voreingestellten Trägheitsmomentes, das mittels einer Korrektureinheit insbesondere bei Transientenzuständen korrigiert wird, wobei der Korrekturwert berechnet wird auf der Grundlage der Ist-Geschwindigkeit und der von der Modell-Berechnungseinheit berechneten Modell-Geschwindigkeit.

Das Dokument DE 103 61 788 A1 offenbart ein Verfahren zur automatischen Inbetriebnahme und Regelung von Aufzugsanlagen, wobei in dem Aufzugskorb für die Inbetriebnahme oder für die spätere Regelung eine Beschleunigungsmesseinrichtung angeordnet wird, die die Ist-Beschleunigung des Fahrkorbes misst. Die Abweichung eines vorgegebenen Fahrprofils zu dem tatsächlich durch den Beschleunigungssensor gemessenen Fahrprofil wird berechnet, um auf dieser Grundlage eine Reglerkorrekturgröße zu berechnen. Dieses Verfahren kann mehrmals durchgeführt werden, um den Regler iterativ einzustellen.

Schließlich offenbart die EP 0 884 264 A1 ein Verfahren zum Regeln einer Aufzugsanlage, wobei Fahrwertsollwerte für einen Weg, eine Geschwindigkeit und eine Beschleunigung vorgegeben werden. Ferner ist eine zuschaltbare überlagerte schnelle Drehzahlregelung zum Halten des Fahrkorbes nach dem Öffnen einer Haltebremse vorgesehen.

Hierdurch soll es möglich sein, die Aufzugsanlage ohne Lastmessvorrichtungen auszustatten.

Vor dem obigen Hintergrund ist es eine Aufgabe der Erfindung, ein verbessertes Verfahren zum Einstellen eines Regelkreises anzugeben, das mit möglichst wenigen manuellen Eingriffen erfolgen kann und eine gute Anpassung des Regelkreises an die spezifischen Gegebenheiten einer Aufzugsanlage ermöglicht.

Diese Aufgabe wird gelöst durch ein Verfahren zum Einstellen eines Regelkreises für einen Antrieb einer Aufzugsanlage, insbesondere für einen Elektromotorantrieb, wobei der Regelkreis einen Antriebsregelkreis und eine Vorsteuerung aufweist, die einen Vorsteuerungssollwert für den Antriebsregelkreis vorgibt, wobei der Vorsteuerungssollwert eine Funktion von wenigstens einer messbaren Variablen der Aufzugsanlage und von wenigstens einem einstellbaren Vorsteuerungsparameter ist, wobei der Vorsteuerungsparameter bei Inbetriebnahme der Aufzugsanlage und/oder während des Betriebs der Aufzugsanlage automatisch mittels eines Fehlerminimierungsverfahrens eingestellt wird, durch das ein Fehler zwischen dem Vorsteuerungssollwert und einem durch den Vorsteuerungssollwert beaufschlagten Antriebssollwert minimiert wird, der während einer Inbetriebnahmefahrt und/oder während einer Betriebsfahrt auftritt.

Ferner wird die obige Aufgabe gelöst durch eine Steuereinrichtung für eine Aufzugsanlage, die einen derartigen Regelkreis aufweist, wobei ein Vorsteuerungsparameter des Regelkreises mittels dieses Verfahrens eingestellt ist.

Schließlich wird die obige Aufgabe gelöst durch eine Aufzugsanlage mit einem Fahrkorb und einem Antrieb, der mit einem Regelkreis einer Steuereinrichtung dieser Art geregelt wird.

Durch dieses Einstellverfahren kann eine Inbetriebnahme einer Aufzugsanlage erfolgen, indem die Aufzugsanlage zunächst mit einem beliebig eingestellten Vorsteuerungsparameter in eine Inbetriebnahmefahrt versetzt wird. Bei dieser Inbetriebnahmefahrt kommt es aufgrund der zunächst nicht ideal eingestellten Vorsteuerung in der Regel zu Rucken beim Anfahren. Mit anderen Worten ist in diesen Phasen der Fehler zwischen Vorsteuerungssollwert und Antriebssollwert relativ groß. Durch das Fehlerminimierungsverfahren kann dieser Fehler minimiert werden, der während einer solchen Inbetriebnahmefahrt auftritt, so dass bei folgenden Fahrten eine bessere Fahrkurve erreicht wird.

Im Gegensatz zu Einstellverfahren, bei denen eine Lastvorsteuerung eingestellt wird, während versucht wird, den Fahrkorb stationär zu halten, wird bei dem erfindungsgemäßen Einstellverfahren bewusst in Kauf genommen, dass eine Inbetriebnahmefahrt nicht vollkommen ruckfrei erfolgen kann. Durch die automatische Einstellung des Vorsteuerungsparameters aufgrund des während der Inbetriebnahmefahrt auftretenden Fehlers zwischen Vorsteuerungssollwert und Antriebssollwert ist es erfindungsgemäß jedoch möglich, diesen Vorsteuerungsparameter bereits nach einer Inbetriebnahmefahrt relativ gut einzustellen.

Das erfindungsgemäße Einstellverfahren kann auch dazu verwendet werden, den Vorsteuerungsparameter im laufenden Betrieb der Aufzugsanlage an Alterungserscheinungen (Reibung etc.) anzupassen.

Die Aufgabe wird somit vollkommen gelöst.

Gemäß einer bevorzugten Ausführungsform wird während der Inbetriebnahmefahrt und/oder der Betriebsfahrt eine Mehrzahl von zeitlich aufeinanderfolgenden Messungen des Vorsteuerungssollwertes und des Antriebssollwertes sowie der messbaren Variablen durchgeführt, wobei das Fehlerminimierungsverfahren auf der Grundlage dieser Messungen durchgeführt wird.

Die zeitlich aufeinanderfolgenden Messungen führen zu einer Mehrzahl von Messdatensätzen, wobei die einzelnen Messdaten eines bestimmten Zeitpunktes über mathematische Gleichungen miteinander verknüpft sind. Die Mehrzahl von Messungen führt folglich zu einem Gleichungssystem linearer (oder auch nicht-linearer) Art.

Für die Anwendung eines Fehlerminimierungsverfahrens auf ein derartiges Gleichungssystem gibt es entweder ganzheitliche Lösungen oder auch rekursive Lösungen.

Insgesamt ist es bevorzugt, wenn das Fehlerminimierungsverfahren ein Verfahren der kleinsten Fehlerquadrate ist.

Dieses Fehlerminimierungsverfahren liefert zum einen gute Werte und ist mathematisch gut beherrschbar, insbesondere mit den begrenzten Rechnerkapazitäten einer Steuereinrichtung einer Aufzugsanlage.

Ferner ist es insgesamt bevorzugt, wenn nicht nur ein Vorsteuerungsparameter sondern eine Mehrzahl von Vorsteuerungsparametern automatisch mittels des Fehlerminimierungsverfahrens eingestellt wird.

Die verschiedenen Vorsteuerungsparameter können unterschiedliche Eigenschaften der Aufzugsanlage parametrisieren. Diese Eigenschaften können insbesondere das Trägheitsmoment der Aufzugsanlage, eine von der Fahrkorbposition abhängige Seillast sowie eine Beladung des Fahrkorbes sein.

Somit ist es besonders bevorzugt, wenn während einer Inbetriebnahmefahrt ein erster Vorsteuerungsparameter automatisch eingestellt wird, der eine Seillast parametrisiert.

Die Seillast ist dabei eine von der Fahrkorbposition abhängige Eigenschaft. Befindet sich beispielsweise der Fahrkorb in der obersten Haltestelle, so ist das Gegengewicht in der untersten; somit hängen die Seilmassen der Tragseile hauptsächlich auf der Gegengewichtsseite.

In entsprechender Weise ist es bevorzugt, wenn während einer Inbetriebnahmefahrt ein zweiter Vorsteuerungsparameter automatisch eingestellt wird, der ein Trägheitsmoment der Aufzugsanlage parametrisiert.

Dabei ist es besonders bevorzugt, wenn das durch den zweiten Vorsteuerungsparameter parametrisierte Trägheitsmoment das Systemträgheitsmoment der Aufzugsanlage im unbeladenen Zustand ist.

Der erste Vorsteuerungsparameter ist im Wesentlichen von der Fahrkorbposition abhängig. Dabei kann die erste Fahrt mit der Aufzugsanlage (Inbetriebnahmefahrt) bspw. unbeladen durchgeführt werden. Der zweite Vorsteuerparameter ist im Wesentlichen abhängig von dem Systemträgheitsmoment. Daher können für den ersten Vorsteuerungsparameter und den zweiten Vorsteuerungsparameter bereits während der Inbetriebnahmefahrt sehr gute Lösungen erzielt werden.

Die Beladung des Fahrkorbes ist eine weitere wichtige Eigenschaft, die einen Einfluss auf die Vorsteuerung hat.

Somit ist es ebenfalls bevorzugt, wenn während einer weiteren Fahrt, bei der die Beladung eines Fahrkorbes der Aufzugsanlage gegenüber der Inbetriebnahmefahrt unterschiedlich ist (bspw. durch den Zustieg von Fahrgästen), ein dritter Vorsteuerungsparameter eingestellt wird, der das durch die Beladung hervorgerufene Trägheitsmoment parametrisiert, und/oder ein vierter Vorsteuerungsparameter eingestellt wird, der eine Beladungslast (also die Beladung selbst) parametrisiert, und/oder ein fünfter Vorsteuerungsparameter eingestellt wird.

Nach der weiteren Fahrt, die mit einer beliebigen Beladung, durchgeführt wird, können der erste bis fünfte Vorsteuerungsparameter bereits sehr gut eingestellt sein. Vorzugsweise können auch für den dritten, den vierten und/oder den fünften Vorsteuerungsparameter bereits bei der ersten Inbetriebnahme gute Vorhersagen getroffen werden, so dass die diesbezüglichen Einstellungsschritte im Wesentlichen Optimierungsschritte sind.

Weitere Inbetriebnahmefahrten sind daher in der Regel nicht erforderlich. Eine Verfeinerung der Vorsteuerungsparameter kann dann in folgenden Betriebsfahrten erfolgen. Es ist jedoch möglich, zwischen der Inbetriebnahmefahrt und der weiteren Fahrt, bei der die Beladung anders ist (bspw. durch Zustieg von Fahrgästen), noch weitere Fahrten durchzuführen, bei denen die Beladung gleich der Beladung bei der Inbetriebnahmefahrt ist.

Gemäß einer weiteren insgesamt bevorzugten Ausführungsform weist der Antriebsregelkreis einen Stromregler zum Regeln eines elektrischen Stromes eines Antriebsmotors sowie einen vorgeschalteten Drehzahlregler auf, dessen Ausgang mit dem Eingang des Stromreglers verbunden ist, wobei der Antriebssollwert den Eingang des Stromreglers bildet.

Eine derartige Reglerkaskade ist sinnvoll, da für Aufzugsfahrten häufig ein bestimmtes Geschwindigkeitsprofil vorgegeben wird (welches insbesondere einen sanften Anlauf und ein sanftes Abbremsen vorgibt).

Da ein solcher Drehzahlregler im Allgemeinen nicht schnell genug arbeitet bzw. nicht dazu in der Lage ist, auf Änderungen schnell zu reagieren, ist es besonders bevorzugt, wenn der Vorsteuerungssollwert auf den Ausgang des Drehzahlreglers aufgeschaltet wird, derart, dass der Antriebssollwert durch die Summe des Ausgangs des Drehzahlreglers und des Vorsteuerungssollwertes gebildet ist.

Mit anderen Worten wird bei dem erfindungsgemäß eingestellten Regelkreis der Aufzugsanlage dem - schnellen - Stromregler durch den Vorsteuerungssollwert ein für die jeweilige Aufzugsfahrt bereits weitgehend optimiertes Sollwertsignal vorgegeben, so dass der Drehzahlregler im Idealfall gar nicht mehr "eingreifen" muss, um eine Aufzugsfahrt durchzuführen. Aus diesem Grunde versteht sich auch, dass der Vorsteuerungssollwert vorzugsweise abhängig ist von der Fahrkorbposition, der Fahrkorbbeschleunigung und/oder der jeweiligen Beladung des Fahrkorbes.

Zur effizienten Ermittlung des Vorsteuerungssollwertes weist dieser generell einen Lastvorsteuerungswert und einen Beschleunigungsvorsteuerungswert auf.

Der Lastvorsteuerungswert ist dabei in der Regel von der Fahrkorbposition und der Beladung abhängig. Der Beschleunigungsvorsteuerungswert ist dabei in der Regel von dem Systemträgheitsmoment der gesamten Aufzugsanlage abhängig.

Vorzugsweise wird hierbei erfindungsgemäß vorgesehen, dass auch der Beschleunigungsvorsteuerungswert von der Beladung eines Fahrkorbes der Aufzugsanlage abhängt.

In diesem Fall kann der Beschleunigungsvorsteuerungswert, über den in der Regel das Anfahren und das Abbremsen des Fahrkorbes vorgegeben werden, nicht nur in Abhängigkeit von der Systemträgheit der Aufzugsanlage durchgeführt werden, sondern auch in Abhängigkeit von der Trägheit, die durch die Beladung des Aufzugskorbes hervorgerufen wird.

Bei dem erfindungsgemäßen Verfahren wird zur automatischen Ermittlung der Vorsteuerungsparameter der Vorsteuerungssollwert vorzugsweise gemäß folgender Formel abgeschätzt:

$$i\_q\_est^* = (xK-xM/2) \cdot c1 + aK \cdot c2 + 1 \cdot c3,$$

wobei

i_q_est*    Abschätzung des Vorsteuerungssollwertes
xK          aktuelle Fahrkorbposition
aK          aktuelle Fahrkorbbeschleunigung

xM       maximale Fahrkorbposition (Schachthöhe)
c1        erster Berechnungsparameter
c2        zweiter Berechnungsparameter
c3        dritter Berechnungsparameter.

Die Berechnungsparameter können unmittelbar Vorsteuerungsparameter für die Vorsteuerung sein.

Zur genaueren Differenzierung ist es jedoch bevorzugt, wenn der erste bis dritte Berechnungsparameter jeweils durch das Fehlerminimierungsverfahren für eine Fahrt mit einer bestimmten Beladung ermittelt werden, woraus dann eine Mehrzahl von Vorsteuerungsparametern (bspw. erster bis fünfter Vorsteuerungsparameter) ermittelt werden. Dabei kann es, wie oben erwähnt, sinnvoll sein, zur Ermittlung von weiteren Vorsteuerungsparametern eine weitere Fahrt mit einer unterschiedlichen Beladung durchzuführen, um auf diese Weise die Wechselwirkungen zwischen den Berechnungsparametern und den Vorsteuerungsparametern exakt bestimmen zu können.

Insgesamt ist es auch bevorzugt, wenn der Vorsteuerungsparameter während des Betriebs der Aufzugsanlage von einer Überwachungsroutine überwacht wird.

Hierdurch kann bei starken Veränderungen des Vorsteuerungsparameters eine Wartungsaufforderung eingeleitet werden.

Durch die vorliegende Erfindung wird je nach Ausprägung insbesondere eine Reduzierung der Komplexität bei der Inbetriebnahme erzielt. Insbesondere sind vorzugsweise keine manuellen Einstellarbeiten notwendig. Ferner kann eine Steigerung der Sicherheit (Haltegenauigkeit) erzielt werden. Auch eine Steigerung des Komforts (kein Anfahrruck) ist möglich.

Diese Regeleigenschaften werden dadurch erzielt, dass der oder die Vorsteuerungsparameter des Regelkreises durch das Fehlerminimierungsverfahren gut eingestellt werden.

Die Abschätzung des Vorsteuerungssollwertes bzw. die Einstellung der Vorsteuerungsparameter kann bei jeder Fahrt (Inbetriebnahmefahrt und Betriebsfahrt) stets im Hintergrund mitlaufen, da der Fehlerminimierungsalgorithmus vorzugsweise ohne zusätzliche Signale auskommt und das System (Aufzugsanlage) nur beobachtet. Daher werden stets die optimalen Parameter ermittelt. Ändert sich bspw. durch Verschleiß die Kalibrierung einer Lastmesseinrichtung, werden die Parameter automatisch adaptiert.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:

Fig. 1     eine schematische Darstellung einer erfindungsgemäßen Aufzugsanlage;

Fig. 2     ein Blockschaltbild eines Ausführungsbeispiels eines Regelkreises einer erfindungsgemäßen Steuereinrichtung;

Fig. 3     ein Diagramm von Lastmoment und Fahrkorbgeschwindigkeit über der Zeit bei einem gut eingestellten Regelkreis;

Fig. 4     eine Darstellung verschiedener Lastkomponenten über der Zeit während einer Aufzugsfahrt;

Fig. 5     eine Darstellung eines Antriebssollwertes und eines geschätzten Vorsteuerungssollwertes über der Zeit während einer Inbetriebnahmefahrt, wobei der so geschätzte Vorsteuerungssollwert bei einer nachfolgenden Fahrt (z.B. Fig. 7/8) aufgeschaltet wird;

Fig. 6     eine Darstellung von Fahrkorbgeschwindigkeit und Fahrkorbbeschleunigung über der Zeit während einer Inbetriebnahmefahrt;

Fig. 7     eine Darstellung eines Antriebssollwertes, eines geschätzten Vorsteuerungssollwertes und eines Ausgangs eines Drehzahlreglers über der Zeit während einer Fahrt nach der Inbetriebnahmefahrt;

Fig. 8     eine Darstellung von Fahrkorbgeschwindigkeit und Fahrkorbbeschleunigung über der Zeit während einer Fahrt nach der Inbetriebnahmefahrt; und

Fig. 9     ein Flussdiagramm einer bevorzugten Ausführungsform des erfindungsgemäßen Einstellverfahrens.

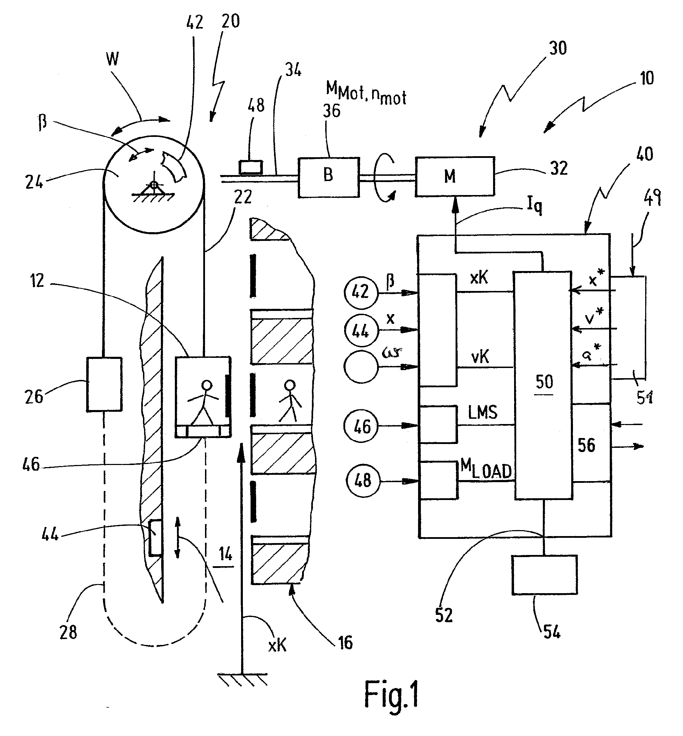

In Fig. 1 ist eine Aufzugsanlage für ein Gebäude in Form eines Personenaufzuges oder eines Lastaufzuges generell mit 10 bezeichnet.

Die Aufzugsanlage 10 weist einen Fahrkorb 12 auf, der in einem Schacht 14 eines Gebäudes 16 auf- und abbewegbar ist.

Zu diesem Zweck beinhaltet die Aufzugsanlage 10 einen Seiltrieb 20. Der Seiltrieb 20 weist ein Tragseil 22 auf, dessen eines Ende mit dem Fahrkorb 12 verbunden ist. Das andere Ende des Tragseils 22 ist mit einem Gegengewicht 26 verbunden. Das Tragseil 22 ist über eine Treibscheibe 24 geführt, die drehbar im Bereich eines oberen Abschnittes des Schachtes an dem Gebäude 16 gelagert ist.

Bei 28 ist schematisch ein Unterseil 28 gezeigt, über das unterschiedliche Seilmassen auf der Fahrkorbseite einerseits und der Gegengewichtsseite andererseits zumindest teilweise ausgeglichen werden können.

Eine Antriebseinheit 30 weist eine elektrische Maschine 32 auf, die in der Regel ausschließlich als Elektromotor betrieben wird. Die elektrische Maschine 32 ist vorzugsweise als Drehfeldmaschine ausgebildet, insbesondere als Asynchronmaschine oder permanent erregte Synchronmaschine.

Die elektrische Maschine 32 weist eine Ausgangswelle 34 auf, die mit der Treibscheibe 24 verbunden ist. An der Welle 34 kann ferner eine Bremse 36 vorgesehen sein, auf deren Funktion jedoch im Rahmen der vorliegenden Anmeldung nicht näher eingegangen wird.

Über die Welle 34 kann auf die Treibscheibe 24 ein Motormoment M_Mot ausgeübt werden, wobei die Welle 34 mit einer Drehzahl n_Mot dreht. Ein jeweiliger Drehwinkel der Treibscheibe 24 ist schematisch bei $\beta$ gezeigt, bei einer Winkeldrehgeschwindigkeit $\omega$ und einer Winkelbeschleunigung $\alpha$.

Zur Regelung der Aufzugsanlage 10 ist eine Steuereinrichtung 40 vorgesehen. Die Steuereinrichtung 40 empfängt üblicherweise ein Signal von einem Winkelsensor 42, der den Drehwinkel $\beta$ der Treibscheibe 24 sowie die jeweiligen Umdrehungen erfasst. Der Drehwinkel $\beta$ kann jedoch auch sensorlos erfasst werden. Der Drehwinkel $\beta$ ist im Wesentlichen proportional zu der jeweiligen Position xK des Fahrkorbes. Die Steuereinrichtung 40 empfängt ferner ein Signal eines Wegsensors 44, der bspw. im Bereich einer Haltestelle (oder bei allen Haltestellen) des Fahrkorbes 12 angeordnet sein kann. Da aufgrund von Dehnung des Seiles 22 und sonstigen Einflüssen die Position des Fahrkorbes 12 nicht immer hundertprozentig proportional ist zu dem Drehwinkel $\beta$, kann durch einen derartigen Wegsensor 44 im Bereich einer oder mehrerer Haltestellen eine genaue Positionierung des Fahrkorbes 12 an diesen Haltestellen erfolgen.

Ferner empfängt die Steuereinrichtung 40 ein Winkelgeschwindigkeitssignal $\omega$.

Wie es in Fig. 1 schematisch dargestellt ist, können der Drehwinkel $\beta$, das Signal x des Wegsensors 44 und ggf. das Winkelgeschwindigkeitssignal $\omega$ umgerechnet werden in eine Fahrkorbposition xK und eine Fahrkorbgeschwindigkeit vK.

Die Steuereinrichtung 40 ist ferner mit einem Lastmesssensor 46 verbunden. Der Lastmesssensor 46 liefert vorzugsweise ein Signal, das die prozentuale Beladung des Fahrkorbes 12 angibt, im Bereich von 0 % (keine Beladung) bis 100 % (Maximalbeladung). Die Steuereinrichtung 40 errechnet hieraus ein Lastmesssignal LMS, dessen Wertebereich von 0 bis 1 geht.

Ferner empfängt die Steuereinrichtung 40 ein Signal eines Drehmomentsensors 48, der das auf den Motor wirkende Lastmoment M_Load repräsentiert. Ein Fahrkurvenrechner 51 empfängt ein Signal "Zielstockwerk" 49 und erzeugt hieraus Signale betreffend einen Fahrkorbpositions-Sollwert x*, einen Fahrkorbgeschwindigkeits-Sollwert v* und einen Fahrkorbbeschleunigungs-Sollwert a*.

Die obigen Messwerte und Sollvorgaben werden einem Regelkreis 50 eingegeben, der hieraus einen Motorstrom Iq erzeugt, bei dem es sich vorzugsweise um einen Querstrom einer feldorientiert geregelten Drehfeldmaschine 32 handelt. Ein Längsstrom einer derartigen Drehfeldmaschine wird üblicherweise auf Null eingestellt. Der Querstrom $I_q$ ist in der Regel proportional zu dem von dem Motor 30 abgegebenen Drehmoment. Demzufolge kann der Drehmomentsensor 48 auch als Stromsensor ausgebildet sein, der die Größe des Motorstromes Iq misst. Bspw. kann der Stromsensor durch mehrere Stromsensoren gebildet sein. Diese messen die Strangströme der elektrischen Drehfeldmaschine, woraus die Ströme Iq und Id durch eine Koordinatentransformation berechnet werden können.

In Fig. 1 ist ferner dargestellt, dass die Steuereinrichtung 40 eine I/O-Schnittstelle 52 aufweist, die bspw. an ein Eingabegerät 54 (ein Notebook oder dergleichen) angeschlossen werden kann. Über die Schnittstelle 52 kann die Steuereinrichtung 40 folglich programmiert werden. Ferner ist der Vollständigkeit halber bei 56 eine Überwachungseinrichtung 56 gezeigt, die bspw. Sicherheitssensoren (wie Fahrschachttür offen etc.) abfragt und auswertet. Diese Überwachungseinrichtung 56 ist dem Regelkreis 50 generell übergeordnet, so dass die Überwachungseinrichtung 56 bspw. unabhängig von dem Ausgang des Regelkreises die Bremse 36 betätigen kann, etc.

Der Regelkreis 50 stellt einen Strom Iq des Elektromotors 32. Es versteht sich, dass zwischen der Steuereinrichtung 40 und dem Elektromotor 32 noch eine geeignete Leistungselektronik vorgesehen sein kann, die jedoch vorliegend nicht dargestellt ist.

Für die Regelung der Aufzugsanlage ist zu berücksichtigen, dass der Elektromotor 32 ein Motormoment M_Mot bereitstellen muss, das zum einen die statischen Lastbedingungen berücksichtigt. Zum anderen muss das Motormoment M_Mot zum Durchführen von Aufzugsfahrten ein Beschleunigungs- oder ein Abbremsmoment bereitstellen.

Bei der Regelung der statischen Lasten ist zum einen der Unterschied zwischen dem Gewicht des Fahrkorbes 12 und dem Gegengewicht 26 zu berücksichtigen. Die Masse des Gegengewichtes 26 wird vorzugsweise so gewählt, dass das Gegengewicht 26 dem Gewicht des leeren Fahrkorbes 12 zuzüglich einem Wert von bspw. 40 bis 50 % der maximalen Zuladung des Fahrkorbes entspricht.

Ferner ist bei der Regelung zu berücksichtigen, dass je nach Fahrkorbposition xK in der Regel unterschiedliche Seilmassen auf der Fahrkorbseite einerseits und der Gegengewichtsseite andererseits auszugleichen sind.

Bei Beginn einer Aufzugsfahrt wird zunächst die Bremse 36 gelöst. Je nach Beladungszustand und Fahrkorbposition xK ergibt sich ein unterschiedlicher Lastunterschied zwischen Gegengewichtsseite und Fahrkorbseite. Dieser Lastunterschied ist mittels eines Drehzahlreglers in der Regel nicht sofort ausgleichbar, so dass bei einer reinen Drehzahlregelung beim Anfahren im Fahrkorb ein Ruck spürbar wäre. Daher muss von dem Elektromotor 32 bereits beim Öffnen der Bremse 36 ein Drehmoment M_Mot bereitgestellt werden, das genau dieser jeweiligen Lastdifferenz entspricht. Dieses Drehmoment wird vorzugsweise durch eine Lastvorsteuerung unabhängig von einem Drehzahlregelkreis bereitgestellt.

Im Stand der Technik ist es generell erforderlich, dass ein Installateur das für eine jeweilige Kabinenposition und einen jeweiligen Beladungszustand korrekte Drehmoment der Lastvorsteuerung einstellt. Diese manuelle Einstellung ist häufig fehlerbehaftet.

Ferner muss bei Beginn der Aufzugsfahrt neben dem statischen Lastausgleich die gesamte Trägheit der Aufzugsanlage beschleunigt werden, wofür ebenfalls ein entsprechendes Drehmoment bereitgestellt werden muss. Ein Drehzahlregelkreis kann häufig nicht beliebig schnell ausgeführt werden, so dass beim Beschleunigen und beim Abbremsen stets kleine Verzögerungen zwischen einem Drehzahlsollwert und einem Drehzahlistwert existieren. Auch diese Differenzen können durch eine geeignete Beschleunigungsvorsteuerung minimiert werden, die ferner die Haltegenauigkeit des Fahrkorbes steigern können.

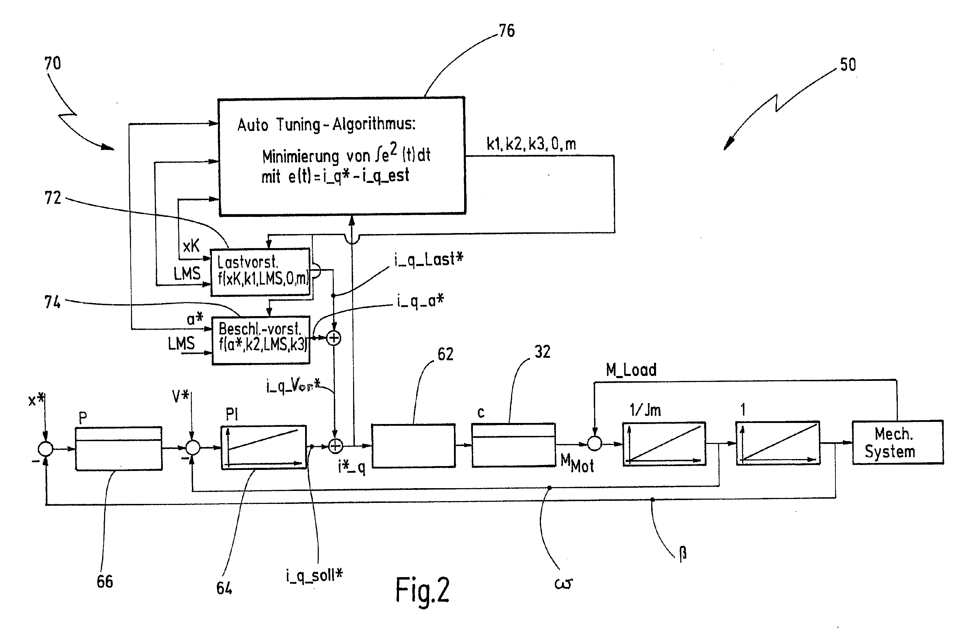

In Fig. 2 ist ein Ausführungsbeispiel eines Regelkreises 50 für die Steuereinrichtung 40 in schematischer Form als Blockschaltbild dargestellt.

Der Regelkreis 50 hat einen Stromregler 62, dessen Eingang einen Stromsollwert i_q* erhält. Der Ausgang des Stromreglers 62 ist (ggf. über eine Leistungselektronik) mit der elektrischen Maschine 32 verbunden, die eine Motorkonstante c = M_Mot/iq aufweist. Die elektrische Maschine 32 stellt ein Motormoment M_Mot bereit, dem ein Lastmoment M_Load des mechanischen Systems entgegenwirkt. Das resultierende Moment führt über das Trägheitsmoment Jm des Motors 32 zu einer der Ist-Geschwindigkeit vK des Fahrkorbes entsprechenden Winkelgeschwindigkeit $\omega$ und zu einem der Ist-Position xK des Fahrkorbes (Fahrkorbposition) entsprechenden Drehwinkel $\beta$ der Treibscheibe 24.

Dem Stromregler 62 ist ein Drehzahlregler 64 vorgeschaltet, der bspw. als PI-Regler ausgebildet sein kann. Der Drehzahlregler 64 erhält am Eingang eine Regelabweichung zwischen einem Geschwindigkeitssollwert v* und der gemessenen Winkelgeschwindigkeit $\omega$, die auf eine Geschwindigkeit umgerechnet ist, und ist ferner mit dem Ausgang eines Positionsreglers 66 verbunden. Der Positionsregler 66 ist als Proportionalregler (P) ausgebildet und erhält eine Regelabweichung zwischen einem Positionssollwert x* und dem gemessenen Drehwinkel $\beta$ (umgerechnet auf eine Position).

Der Drehzahlregler 64 erzeugt den Ausgangswert i_q_soll*, der auf den Eingang des Stromreglers 62 gelegt wird und einen Sollwert des Stromreglers 62 darstellt.

Bei einem kaskadierten Regelkreis 50 dieser Art kann der Drehzahlregler 64, wie oben beschrieben, in der Regel nicht schnell genug arbeiten, um einen weitgehend ruckfreien Betrieb der Aufzugsanlage zu gewährleisten.

Aus diesem Grund wird dem Ausgang i_q_soll* des Drehzahlreglers 64 ein Vorsteuerungssollwert i_q_vor* aufgeschaltet. Der Vorsteuerungssollwert i_q_vor* ist eine Summe aus einem Lastvorsteuerungswert i_q_Last* und einem Beschleunigungsvorsteuerungswert i_q_a*. Der Lastvorsteuerungswert i_q_Last* entspricht einem Drehmoment, das vom Motor bei Öffnung der Bremse 36 bereitgestellt werden muss, um die statischen Lastunterschiede zwischen Gegengewicht und Fahrkorb unter Berücksichtigung der Beladung auszugleichen. Der Beschleunigungsvorsteuerungswert i_q_a* entspricht dem zum Beschleunigen oder Abbremsen bereitzustellenden Drehmoment.

Der Lastvorsteuerungswert i_q_Last* wird von einer Lastvorsteuerung 72 bereitgestellt, die eine Funktion der gemessenen Fahrkorbposition xK und eines Ausgangswertes LMS des Lastsensors 46 sowie eines ersten Vorsteuerungsparameters k1, eines vierten Vorsteuerungsparameters m und eines fünften Vorsteuerungsparameters O ist.

Genauer gesagt ergibt sich der Lastvorsteuerungswert i_q_Last* wie folgt

$$i\_q\_Last^{*} = k1{\cdot}(xk{-}xM/2){+}m{\cdot}LMS{+}O$$

wobei xM die maximale Fahrkorbposition bzw. Schachthöhe ist.

Der erste Ausdruck dieser Gleichung berücksichtigt die Seilmasse, die von dem ersten Vorsteuerungsparameter k1 parametrisiert wird. Der zweite Ausdruck charakterisiert die Beladung LMS, die durch den vierten Vorsteuerungsparameter m parametrisiert wird. Der fünfte Vorsteuerungsparameter O ist ein Offset, der die Lastdifferenz vorsteuert, um die das Gegengewicht bei leerer Kabine größer ist als das Gewicht des Fahrkorbes. Wenn das Gegengewicht genau so groß ist wie das Gewicht des leeren Fahrkorbes, ist der fünfte Vorsteuerungsparameter gleich null.

Für den Lastvorsteuerungswert sind also zumindest der erste Vorsteuerungsparameter k1 und der vierte Vorsteuerungsparameter m geeignet einzustellen. Die maximale Fahrkorbposition xM muss ggf. ebenfalls eingestellt werden, falls diese nicht ohnehin bekannt ist.

Bei einer Aufzugsanlage mit Unterseil kann der erste Vorsteuerungsparameter k1 = 0 sein.

Der Beschleunigungsvorsteuerungswert i_q_a* wird von einer Beschleunigungsvorsteuerung 74 bereitgestellt, die eine Funktion eines Fahrkorbbeschleunigungssollwertes a*, eines zweiten Vorsteuerungsparameters k2, des Ausgangs LMS des Lastsensors und eines dritten Vorsteuerungsparameters k3 ist.

Genauer gesagt wird der Beschleunigungsvorsteuerungswert i_q_a* durch folgende Formel berechnet:

$$i\_q\_a^* = (k2 + k3 \cdot LMS) \cdot a^*.$$

Dabei basiert die erste Komponente k2·a* auf der Tatsache, dass für die Beschleunigung die Grundformel M = Js·$\alpha$ gilt. Dabei ist Js das Systemträgheitsmoment der gesamten Aufzugsanlage. $\alpha$ ist die Winkelbeschleunigung, die proportional ist zur Fahrkorbbeschleunigung.

Da der elektrische Motor 32 generell stromgeregelt betrieben wird und der Querstrom bei einer feldorientierten Regelung proportional zum Drehmoment ist (M ~ i_q), kann die erforderliche Beschleunigungsvorsteuerung im Wesentlichen über diese Komponente erfolgen.

Das Systemträgheitsmoment Js der Aufzugsanlage wird generell bei leerem Fahrkorb bestimmt. Für eine besonders feine Beschleunigungsvorsteuerung wird bei der obigen Gleichung zusätzlich das durch die Beladung des Fahrkorbes hervorgerufene Trägheitsmoment berücksichtigt, das durch die Komponente k3·LMS·$\alpha$* in den Beschleunigungsvorsteuerungswert i_q_a* eingeht.

Bei den obigen Formeln gilt generell, dass der Index "*" einen Sollwert angibt. Da der Stromregler 62 jedoch nur eine geringe Verzögerung aufweist, kann für die Zwecke der vorliegenden Beschreibung davon ausgegangen werden, dass i_q* ≈ Iq ist.

Im Stand der Technik ist es generell bekannt, Vorsteuerungsparameter im Wesentlichen manuell mittels eines Installateurs einzustellen. Dabei müssten im vorliegenden Fall die Vorsteuerungsparameter K1, K2, K3, m, O sowie ggf. die maximale Fahrkorbposition xM eingestellt werden. Diese manuelle Einstellung ist zeitaufwändig und verlangt gutes Fachpersonal.

Vorliegend wird daher eine Einstelleinrichtung 76 in den Regelkreis 50 integriert, mittels der die Vorsteuerungsparameter automatisch eingestellt werden, und zwar mittels eines Fehlerminimierungsverfahrens, durch das ein Fehler e zwischen dem Vorsteuerungssollwert i_q_vor* und dem Stromsollwert i_q* minimiert wird, der während eines Inbetriebnahmefahrt und/oder während einer Betriebsfahrt auftritt.

Das durch die Einstelleinrichtung 76 implementierte Fehlerminimierungsverfahren geht davon aus, dass der Fehler e(t) zwischen dem Stromsollwert i_q* und dem Vorsteuerungssollwert i_q_vor* zu minimieren ist. Hierbei wird für den Vorsteuerungssollwert zunächst jeweils ein Wert geschätzt (i_q_est*), so dass sich die Fehlerfunktion ergibt zu

$$e(t) = i\_q^* - i\_q\_est^*.$$

Dabei bezieht der geschätzte Vorsteuerungssollwert i_q_est* sowohl die Last- als auch die Beschleunigungsvorsteuerung ein. Zum Zwecke einer einfachen Berechnung wird der Vorsteuerungssollwert daher wie folgt geschätzt:

$$i\_q\_est^* = (xK - xM/2) \cdot c1 + aK \cdot c2 + 1 \cdot c3.$$

Diese Formel lässt sich in Matrizenform schreiben wie folgt:

$$i\_q\_est^* = [u1, u2, u3] \cdot [c1, c2, c3]^T,$$

wobei u1 = xK-xM/2, wobei u2 = aK und wobei u3 = 1. Die Parameter c1, c2, c3 sind Berechnungsparameter.

Zur Fehlerminimierung wird vorzugsweise das Verfahren der kleinsten Fehlerquadrate angewendet, so dass der Fehler e2 = (i_q*-i_q_est*)2 minimiert wird.

Hierzu werden während einer Aufzugsfahrt die jeweiligen Werte von i_q* zu einer Mehrzahl von Zeiten t1 bis tn und die zugehörigen Werte von u1, u2 und u3 zu den Zeiten t1 bis tn aufgezeichnet, so dass sich folgende Matrizengleichung ergibt:

$$\begin{bmatrix} i\_q*(t1) \\ \vdots \\ i\_q*(tn) \end{bmatrix} = \begin{bmatrix} u1(t1) & u2(t1) & u3(t1) \\ \vdots & \vdots & \vdots \\ u1(tn) & u2(tn) & u3(tn) \end{bmatrix} \cdot [c1, c2, c3]^T$$

Diese Matrizengleichung lässt sich vereinfacht schreiben zu

$$\underline{i\_q}^* = \underline{u} \cdot \vec{c}.$$

Die Anwendung des an sich bekannten Verfahrens der kleinsten Fehlerquadrate führt dann zu

$$\vec{c} = \left[ \underline{U}^T \cdot \underline{U} \right]^{-1} \cdot \underline{U}^T \cdot \underline{i\_q}^*.$$

Dieser Algorithmus lässt sich anhand eines aufgenommenen Satzes von Daten entweder ganzheitlich berechnen. Alternativ ist es auch möglich, diesen Algorithmus rekursiv zu berechnen, das heißt von t1 bis tn nacheinander.

Der Algorithmus bestimmt dann die Konstanten c1, c2, c3 so, dass der quadratische Fehler zwischen i_q* und i_q_est* minimiert wird.

Aus den Berechnungsparametern c1, c2, c3 lassen sich dann die Vorsteuerungsparameter wie folgt bestimmen.

Aus den obigen Formeln ergibt sich zum einen, dass c1 = k1. Für den vierten Vorsteuerungsparameter m und den fünften Vorsteuerungsparameter O gilt die Gleichung m·LMS+O = c3. Um den vierten und den fünften Vorsteuerungsparameter zu bestimmen, werden daher prinzipiell zwei Gleichungen mit unterschiedlichem Wert von LMS benötigt, da in der Gleichung zwei Parameter vorhanden sind. Aufgrund des Wissens, dass in einem Aufzug näherungsweise bei halber Beladung (LMS ≈ 0,5) Lastausgleich herrscht und dann keine Lastvorsteuerung für die Beladung notwendig ist, gilt annähernd die Gleichung m·0,5+O = 0. Während der ersten Inbetriebnahmefahrt mit bspw. leerer Kabine (LMS = 0) wird ein Wert von c3 geschätzt, so dass m und O durch die obige Annahme ungefähr ermittelt werden können.

Wenn zu einem späteren Zeitpunkt Fahrgäste einsteigen (LMS ≠ 0), können m und O genau bestimmt werden.

Gleiches gilt für den zweiten und den dritten Vorsteuerungsparameter k2, k3. Es gilt die Gleichung k2+k3·LMS = c2. Dabei ist der Einfluss von k3·LMS relativ gering, maximal etwa 15 %. Nach der ersten Fahrt wird also k2 = c2 gesetzt. Wenn später der Fahrkorb beladen wird (Einstieg von Fahrgästen), liegen zwei Werte für c2 bei unterschiedlichem LMS vor, so dass die Gleichung eindeutig für k2 und k3 lösbar ist.

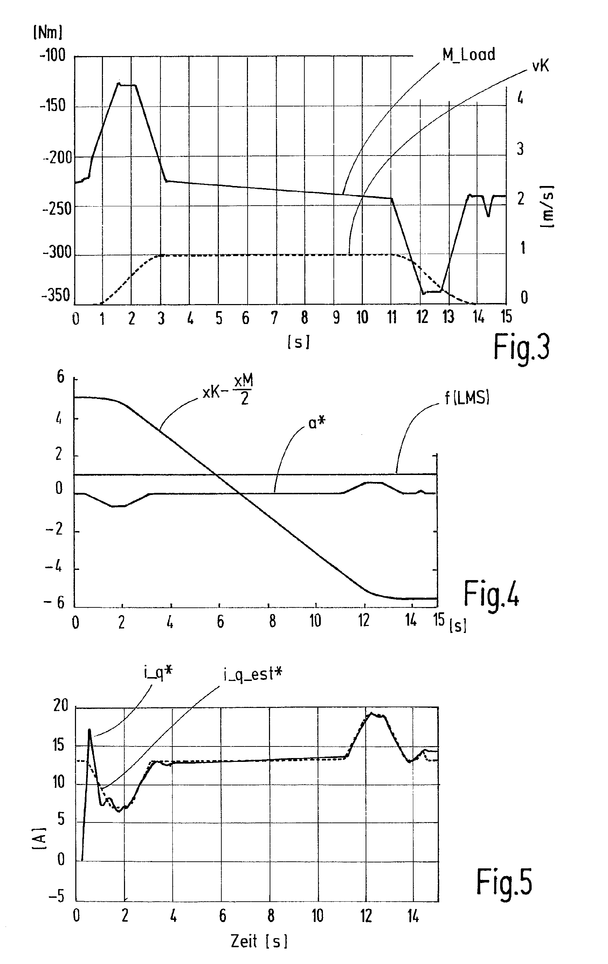

Die obigen Zusammenhänge werden anhand der folgenden Figuren 3 bis 8 näher erläutert. Fig. 3 zeigt ein Diagramm von Lastmoment M_Load und Fahrkorbgeschwindigkeit vK über der Zeit bei einer Aufzugsfahrt des Fahrkorbes von einer Station in eine höhere Station.

Die Darstellungen von M_Load und vK entsprechen dabei einer weitgehend idealen Fahrt, was bereits aus dem stetigen und ruckfreien Verlauf der Fahrkorbgeschwindigkeit vK hervorgeht.

Im Bereich von 0 bis etwa 3 Sekunden wird zusätzlich zu dem aufzubringenden Lastmoment in Höhe von anfangs etwa -220 Nm ein Beschleunigungsmoment eingestellt. Im Bereich zwischen etwa 3 Sekunden und 11 Sekunden sinkt das Lastmoment M_Load aufgrund der sich ändernden Seillast, die von der Kabinenposition abhängt. Im Bereich von etwa 11 Sekunden bis 14 Sekunden wird ein Bremsmoment bereitgestellt. Im Bereich von 14 bis 15 Sekunden erfolgt eine Einschleichfahrt, um ein positionsgenaues Anhalten zu ermöglichen. Diese Einschleichfahrt wird je nach Aufzugstyp weggelassen, so dass auch eine Direkteinfahrt möglich ist.

Fig. 4 zeigt die während einer Aufzugsfahrt auftretenden Werte von xK-xM/2, von a* und von der Lastdifferenz, die eine Funktion f(LMS) der Beladung ist und somit während einer Fahrt konstant bleibt.

Fig. 5 zeigt nun den Verlauf des Stromsollwertes i_q* bei der Inbetriebnahmefahrt der Aufzugsanlage. Ebenso ist der geschätzte Vorsteuerungssollwert i_q_est* dargestellt, wie er bis zum Ende der Fahrt durch die Schätzung der Berechnungsparameter c1, c2, c3 ermittelt wird. Die daraus resultierenden Vorsteuerungsparameter k1, k2, k2, m, O werden für die nachfolgende Fahrt für die Vorsteuerung i_q_vor* verwendet.

Hierbei wird für i_q_est* ein bestimmtes Profil angenommen, das jedoch noch nicht auf die spezifischen Gegebenheiten der gerade installierten Auszugsanlage eingestellt ist. Bei der Inbetriebnahmefahrt wird bspw. zunächst keine Vorsteuerung i_q_vor* verwendet, so dass nur der Drehzahlregler aktiv ist (i_q* = i_q_soll*). Demzufolge ergibt sich für den Wert von i_q* zumindest während des anfänglichen Beschleunigungsvorganges eine Reihe von erheblichen Überschwingern, was bei dem Anfahren während der Inbetriebnahmefahrt als starker Ruck empfunden wird. Die Inbetriebnahmefahrt erfolgt vorzugsweise unbeladen.

Im Verlauf der Inbetriebnahmefahrt wird bei Anwendung des obigen Fehlerminimierungsverfahrens erreicht, dass sich der Wert i_q_est* gut einstellt und sich nur unwesentlich von den anfänglichen Überschwingern beeinflussen lässt.

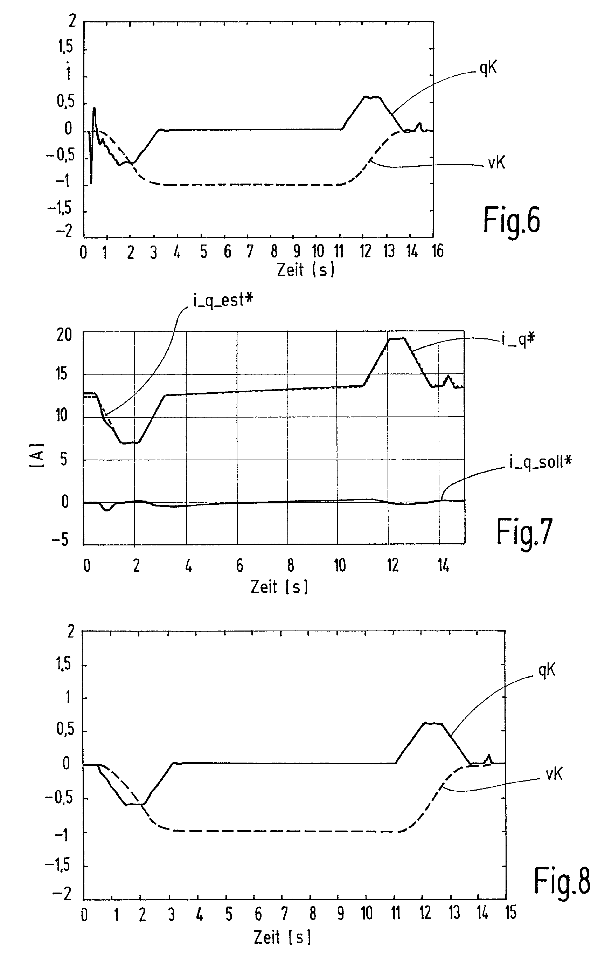

Während der Inbetriebnahmefahrt gemäß Fig. 5 könne sich bspw. eine Fahrkorbgeschwindigkeit vK und eine Fahrkorbbeschleunigung aK ergeben, wie sie in Fig. 6 dargestellt sind. Das Diagramm der Fig. 6 stellt anschaulich dar, dass beim Anfahren während der Inbetriebnahmefahrt noch relativ starke Einregelungsvorgänge der Beschleunigung erforderlich sind, so dass sich insgesamt eine relativ schlechte Fahrkurve ergibt.

Fig. 7 zeigt nun eine zweite Fahrt, die bspw. mit der gleichen Beladung durchgeführt wird, um zu verdeutlichen, dass die Schätzung der Vorsteuerungsparameter aus der Inbetriebnahmefahrt bereits sehr gute Ergebnisse erzielt hat.

In Fig. 7 sind wiederum der Stromsollwert i_q* und der geschätzte Vorsteuerungssollwert i_q_est* dargestellt. Zusätzlich ist der Ausgang i_q_soll* des Drehzahlreglers gezeigt. Man erkennt, dass der Drehzahlregler zu Beginn der zweiten Fahrt noch etwas regeln muss. Im Wesentlichen ist jedoch i_q* = 0, da der überwiegende Teil von i_q* durch die Vorsteuerung i_q_vor* bereitgestellt wird.

Auch ist aus dem Verlauf von i_q* und i_q_est* zu erkennen, dass der Vorsteuerungswert bereits recht gut abgeschätzt wurde. Lediglich beim Anfahren sind noch minimale Differenzen vorhanden.

Hieraus ergibt sich, dass die durch die Einstelleinrichtung 76 eingestellten Vorsteuerungsparameter bereits nach der Inbetriebnahmefahrt sehr gut eingestellt sind, so dass sich eine sehr gute Fahrkurve ergibt, wie sie in Fig. 8 dargestellt ist, wobei Fig. 8 wiederum die Fahrkorbgeschwindigkeit vK und die Fahrkorbbeschleunigung aK darstellt. Diese Kurven entsprechen bereits weitgehend den Idealkurven, so dass insgesamt mit einer einzelnen Inbetriebnahmefahrt eine automatische Einstellung der Vorsteuerungsparameter erfolgt ist. Eine Optimierung der Vorsteuerungsparameter k2, k3, m, O erfolgt automatisch, sobald das erste Mal Fahrgäste einsteigen (LMS≠0). Insbesondere die obige Annahme, dass bei 50% Zuladung Lastausgleich herrscht, wird dann auf den korrekten Wert optimiert. Eine manuelle Einstellung der Vorsteuerungsparameter ist daher nicht notwendig.

Die Einstelleinrichtung 76 kann während des laufenden Betriebs weiter arbeiten, um die Vorsteuerungsparameter laufend anzupassen, insbesondere bspw. an Verschleißerscheinungen der Aufzugsanlage, wie Reibung oder Änderung der Kalibrierung des Lastmesssensors etc.

Eine starke Veränderung des oder der Vorsteuerungsparameter kann darauf hindeuten, dass die Aufzugsanlage einer Wartung bedarf. Folglich wird der Vorsteuerungsparameter vorzugsweise während des Betriebs der Aufzugsanlage von einer Überwachungsroutine überwacht. Bei Erfassen einer starken Veränderung kann die Überwachungsroutine ein Signal erzeugen, dass eine baldige oder eine sofortige Wartung notwendig ist. Das Signal wird vorzugsweise automatisch an einen Servicetechniker abgesendet.

Ein weiterer Vorteil der Einstellung der Vorsteuerungsparameter durch Messung von Variablen während einer Fahrt besteht darin, dass die Haftreibung im Wesentlichen unberücksichtigt bleibt, so dass eine Fehleinstellung aufgrund von Haftreibungseinflüssen vermieden werden kann.

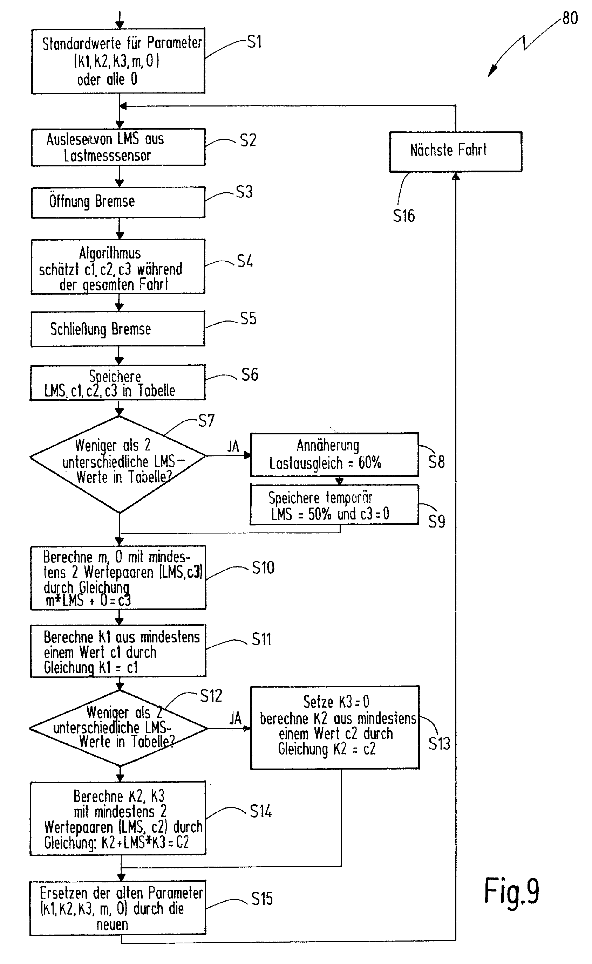

In Fig. 9 ist bei 80 ein Flussdiagramm gezeigt, das eine bevorzugte Ausführungsform des erfindungsgemäßen Verfahrens darstellt. In dem Flussdiagramm 80 werden zunächst für die Vorsteuerungsparameter k1, k2, k3, m, O entweder Standardwerte eingesetzt oder diese Werte werden alle auf Null gesetzt (Schritt S1).

Im nächsten Schritt wird bei einer Inbetriebnahmefahrt zunächst der Wert von LMS aus dem Lastmesssensor 46 ausgelesen (Schritt S2). Anschließend wird die Bremse 36 geöffnet (Schritt S3). Während der folgenden Inbetriebnahmefahrt schätzt die Einstelleinrichtung 76 die Berechnungsparameter c1, c2, c3, und zwar während der gesamten Fahrt (Schritt S4). Nach dem Erreichen des Fahrziels wird die Bremse im Schritt S5 geschlossen. Anschließend werden im Schritt S6 die während der Fahrt geschätzten Werte c1, c2, c3 und der LMS-Wert in einer Tabelle gespeichert.

Im Schritt S7 erfolgt zunächst eine Abfrage, ob in der Tabelle weniger als zwei unterschiedliche Werte von LMS vorhanden sind. Dies ist bei einer Inbetriebnahmefahrt (ersten Fahrt) der Fall, so dass das Flussdiagramm übergeht zum Schritt S8, bei dem näherungsweise von einem Lastausgleich von 50 % ausgegangen wird. In einem anschließenden Schritt S9 wird daher das Wertepaar c3 = 0 bei LMS = 0,5 zusätzlich temporär abgespeichert. Somit sind insgesamt zwei Wertepaare für die folgende Berechnung vorhanden, wobei letzteres nicht in der Tabelle, sondern nur temporär abgespeichert wird.

Im Schritt S10 werden m, O aus mindestens zwei Wertepaaren von LMS und c3 durch die Gleichung m·LMS+O = c3 berechnet. Sind bei einer späteren Fahrt bspw. Fahrgäste zugestiegen, so dass unterschiedliche LMS-Werte und dazu korrespondierende c3 in der Tabelle abgespeichert sind, ist die obige Annäherung nicht mehr notwendig. Damit können die Parameter m, O weiter optimiert werden.

Im folgenden Schritt S11 wird der erste Vorsteuerungsparameter k1 aus mindestens einem Wert von c1 durch die Gleichung k1 = c1 berechnet.

Im folgenden Schritt S12 wird wiederum abgefragt, ob sich weniger als zwei unterschiedliche LMS-Werte in der Tabelle befinden. Dies ist bei der Inbetriebnahmefahrt der Fall, so dass das Flussdiagramm übergeht zum Schritt S13, bei dem k3 = 0 gesetzt wird und bei dem der zweite Vorsteuerungsparameter k2 aus mindestens einem Wert von c2 durch die Gleichung k2 = c2 berechnet wird. Falls zwei unterschiedliche LMS-Werte in der Tabelle vorliegen, was bspw. nach einer weiteren Fahrt mit Fahrgästen der Fall ist, werden k2, k3 in Schritt S14 weiter optimiert.

Im letzten Schritt S15 werden die ursprünglich eingestellten Vorsteuerungsparameter k1, k2, k3, m, O durch die neu berechneten Vorsteuerungsparameter ersetzt.

Liegt eine weitere Fahrtanforderung vor, werden die Berechnungsschritte erneut durchgeführt (Schritt S16), um so die Vorsteuerungsparameter weiter zu optimieren oder im Fall einer Abweichung oder schleichenden Änderung der Parameter ggf. Wartungsarbeiten einzuleiten.

Bei der weiteren Fahrt können bereits zwei unterschiedliche LMS-Werte vorliegen. Ist dies der Fall, können in den Schritten S7 und S12 jeweils die Schritte S8, S9 bzw. S13 umgangen werden, um so die Parameter k2, k3, m, O weiter zu optimieren.

Liste der verwendeten Formelzeichen

| | |
|---|---|
| xK | gemessene Fahrkorbposition |
| xM | maximale Fahrkorbposition (Schachthöhe) |
| x* | Fahrkorbpositions-Sollwert |
| vK | gemessene Fahrkorbgeschwindigkeit (oder Ableitung von xK) |
| v* | Fahrkorbgeschwindigkeits-Sollwert |
| aK | gemessene Fahrkorbbeschleunigung (oder Ableitung von vK) |
| a* | Fahrkorbbeschleunigungs-Sollwert |
| Js | Systemträgheitsmoment der Aufzugsanlage |
| Jm | Trägheitsmoment des elektrischen Motors |
| i_q_soll* | Ausgang Drehzahlregler |
| i_q_vor* | Vorsteuerungssollwert (= i_q_Last* + i_q_a*) |
| i_q_est* | geschätzter Vorsteuerungssollwert |
| i_q* | Stromsollwert (Summe von i_q_soll und i_q_vor) |
| M_Mot | Drehmoment des Elektromotors |
| M_Load | auf den Elektromotor wirkende Last |
| i_q_Last* | Lastvorsteuerungswert |
| i_q_a* | Beschleunigungsvorsteuerungswert |
| Iq | Querstrom des Drehfeldmotors |
| k1 | erster Vorsteuerungsparameter (Seilmasse) |
| k2 | zweiter Vorsteuerungsparameter (Trägheitsmoment) |
| k3 | dritter Vorsteuerungsparameter (Trägheitsmoment bedingt durch Beladung) |
| m | vierter Vorsteuerungsparameter (Beladung) |
| O | fünfter Vorsteuerungsparameter (Offset) |
| LMS | Ausgang eines Lastmesssensors in prozentualer Belastung (Wertebereich von 0 bis 1) |
| e(t) | Fehlerfunktion (= i_q*-i_q_est*) |
| P | Proportionalregler des Positionsregelkreises |
| PI | Proportional/Integralregler des Drehzahlregelkreises |
| c | Motorkonstante (c = M_Mot/Iq) |
| $\alpha$ | Winkelbeschleunigung (proportional zu a) |
| $\omega$ | Winkelgeschwindigkeit (proportional zu v) |
| $\beta$ | Drehwinkel (proportional zu x) |
| c1 | erster Berechnungsparameter (= k1) |
| c2 | zweiter Berechnungsparameter (= k2 + k2 · LMS) |
| c3 | dritter Berechnungsparameter (= m · LMS + O) |

**Patentansprüche**

1. Verfahren zum Einstellen eines Regelkreises (60) für einen Antrieb (30) einer Aufzugsanlage (10), insbesondere für einen Elektromotorantrieb (30), wobei der Regelkreis (60) einen Antriebsregelkreis (62) und eine Vorsteuerung (70) aufweist, die einen Vorsteuerungssollwert (i_q_vor*) für den Antriebsregelkreis (62) vorgibt, wobei der Vorsteuerungssollwert (i_q_vor*) eine Funktion von wenigstens einer messbaren Variablen (xK, LMS, a*) der Aufzugsanlage (10) und von wenigstens einem einstellbaren Vorsteuerungsparameter (k1, k2, k3, m, O) ist,

   **dadurch gekennzeichnet, dass**

   der Vorsteuerungsparameter (k1, k2, k3, m, O) bei Inbetriebnahme der Aufzugsanlage (10) und/oder während des Betriebs der Aufzugsanlage (10) automatisch mittels eines Fehlerminimierungsverfahrens (76) eingestellt wird, durch das ein Fehler (e) zwischen dem Vorsteuerungssollwert (i_q_vor*) und einem durch den Vorsteuerungssollwert (i_q_vor*) beaufschlagten Antriebssollwert (i_q*) während einer Inbetriebnahmefahrt und/oder während einer Betriebsfahrt minimiert wird.

2. Verfahren nach Anspruch 1, wobei während der Inbetriebnahmefahrt und/oder der Betriebsfahrt eine Mehrzahl von zeitlich aufeinanderfolgenden Messungen des Vorsteuerungssollwertes (i_q_vor*) und des Antriebssollwertes (i_q*) sowie der Variablen (xK, LMS, a*) durchgeführt wird und wobei das Fehlerminimierungsverfahren auf der Grundlage der Messungen durchgeführt wird.

3. Verfahren nach Anspruch 1 oder 2, wobei das Fehlerminimierungsverfahren ein Verfahren der kleinsten Fehlerquadrate ist.

4. Verfahren nach einem der Ansprüche 1 - 3, wobei eine Mehrzahl von Vorsteuerungsparametern (k1, k2, k3, m, O) automatisch eingestellt wird.

5. Verfahren nach einem der Ansprüche 1 - 4, wobei während einer Inbetriebnahmefahrt ein erster Vorsteuerungsparameter (k1), der eine Seillast parametrisiert, automatisch eingestellt wird.

6. Verfahren nach einem der Ansprüche 1 - 5, wobei während einer Inbetriebnahmefahrt ein zweiter Vorsteuerungsparameter (k2), der ein Trägheitsmoment (Js) der Aufzugsanlage (10) parametrisiert, automatisch eingestellt wird.

7. Verfahren nach einem der Ansprüche 1 - 6, wobei während einer weiteren Fahrt, bei der die Beladung (LMS) eines Fahrkorbes (12) der Aufzugsanlage (10) gegenüber einer Inbetriebnahmefahrt unterschiedlich ist, ein dritter Vorsteuerungsparameter (k3) eingestellt wird, der das durch die Beladung (LMS) hervorgerufene Trägheitsmoment parametrisiert, und/oder ein vierter Vorsteuerungsparameter (m) eingestellt wird, der eine Beladungslast parametrisiert.

8. Verfahren nach einem der Ansprüche 1 - 7, wobei der Antriebsregelkreis einen Stromregler (62) zum Regeln eines elektrischen Stromes (Iq) eines Antriebsmotors (32) sowie einen vorgeschalteten Drehzahlregler (64) aufweist, dessen Ausgang (i_q_soll*) mit dem Eingang des Stromreglers (62) verbunden ist, wobei der Antriebssollwert (i_q*) den Eingang des Stromreglers (62) bildet.

9. Verfahren nach Anspruch 8, wobei der Vorsteuerungssollwert (i_q_vor*) auf den Ausgang (i_q_soll*) des Drehzahlreglers (64) aufgeschaltet wird, derart, dass der Antriebssollwert (i_q*) durch die Summe des Ausgangs (i_q_soll*) des Drehzahlreglers (64) und des Vorsteuerungssollwertes (i_q_vor*) gebildet ist.

10. Verfahren nach einem der Ansprüche 1 - 9, wobei sich der Vorsteuerungssollwert (i_q_vor*) einen Lastvorsteuerungswert (i_q_Last*) und einen Beschleunigungsvorsteuerungswert (i_q_a*) aufweist, wobei der Beschleunigungsvorsteuerungswert (i_q_a*) von der Beladung (LMS) eines Fahrkorbes (12) der Aufzugsanlage (10) abhängt.

11. Verfahren nach einem der Ansprüche 1 - 10, wobei zur automatischen Ermittlung der Vorsteuerungsparameter (k1, k2, k3, m, O) der Vorsteuerungssollwert (i_q_vor*) gemäß folgender Formel abgeschätzt wird:

$$i\_q\_est^* = (xK - xM/2)\cdot c1 + aK \cdot c2 + 1\cdot c3 \, ,$$

wobei

i_q_est* Abschätzung des Vorsteuerungssollwertes (i_q_vor*),
xK aktuelle Fahrkorbposition
aK aktuelle Fahrkorbbeschleunigung
xM maximale Fahrkorbposition
c1 erster Berechnungsparameter
c2 zweiter Berechnungsparameter
c3 dritter Berechnungsparameter.

12. Verfahren nach Anspruch 11, wobei der erste Berechnungsparameter c1 gleich einem ersten Vorsteuerungsparameter (k1) ist, wobei der zweite Berechnungsparameter c2 eine Funktion eines zweiten und eines dritten Vorsteuerungsparameters (k2, k3) ist, und wobei der dritte Berechnungsparameter c3 eine Funktion eines vierten und eines fünften Vorsteuerungsparameters (m, O) ist.

13. Verfahren nach einem der Ansprüche 1 - 12, wobei der Vorsteuerungsparameter (k1, k2, k3, m, O) während des Betriebs der Aufzugsanlage (10) von einer Überwachungsroutine überwacht wird.

14. Steuereinrichtung (40) für eine Aufzugsanlage (10), mit einem Regelkreis (60) für einen Antrieb (30) einer Aufzugsanlage (10), insbesondere für einen Elektromotorantrieb (30), wobei der Regelkreis (60) einen Antriebsregelkreis (62) und eine Vorsteuerung (70) aufweist, die einen Vorsteuerungssollwert (i_q_vor*) für den Antriebsregelkreis (62) vorgibt, wobei der Vorsteuerungssollwert (i_q_vor*) eine Funktion von wenigstens einer messbaren Variablen (xK, LMS, a*) der Aufzugsanlage (10) und wenigstens eines einstellbaren Vorsteuerungsparameters (k1, k2, k3, m, O) ist, wobei der Vorsteuerungsparameter (k1, k2, k3, m, O) mittels des Verfahrens nach einem der Ansprüche 1 - 13 eingestellt ist.

15. Aufzugsanlage (10) mit einem Fahrkorb (12) und einem Antrieb (30), der mit einem Regelkreis (60) einer Steuereinrichtung (40) nach Anspruch 14 geregelt wird.

## Claims

1. Method for adjusting a control loop (60) for a drive (30) of a lift system (10), in particular for an electric motor drive (30), the control loop (60) having a drive control loop (62) and a feedforward control (70) which prescribes a feedforward setpoint (i_q_vor*) for the drive control loop (62), the feedforward setpoint (i_q_vor*) being a function of at least one measurable variable (xK, LMS, a*) of the lift system (10) and of at least one adjustable feedforward parameter (k1, k2, k3, m, O),
**characterized in that**
during startup of the lift system (10) and/or during the operation of the lift system (10) the feedforward parameter (k1, k2, k3, m, O) is automatically adjusted by means of an error minimization method (76) which is used to minimize an error (e) between the feedforward setpoint (i_q_var*) and a drive setpoint (i_q*) applied by the feedforward setpoint (i_q*) applied by the feedforward setpoint (i-q-vor*) during a startup ride and/or during an operating ride.

2. Method according to Claim 1, in which during the startup ride and/or the operating ride a plurality of temporarily successive measurements of the feedforward setpoint (i_q_vor*) and of the drive setpoint (i_q*) and of the variables (xK, LMS, a*) is carried out, and in which the error minimization method is carried out on the basis of the measurements.

3. Method according to Claim 1 or 2, in which the error minimization method is a method of least square errors.

4. Method according to one of Claims 1 - 3, in which a plurality of feedforward parameters (k1, k2, k3, m, O) is set automatically.

5. Method according to one of Claims 1 - 4, in which during a startup ride a first feedforward parameter (k1), which parameterizes a cable load, is set automatically.

6. Method according to one of Claims 1 - 5, in which during a startup ride a second feedforward parameter (k2), which parameterizes an inertia torque (Js) of the lift system (10), is set automatically.

**7.** Method according to one of Claims 1 - 6, in which during a further ride, in which the load (LMS) of a riding car (12) of the lift system (10) differs from a startup ride, a third feedforward parameter (k3) is set which parameterizes the inertia torque resulting from the load (LMS), and/or a fourth feedforward parameter (m) is set which parameterizes the loading length.

**8.** Method according to one of Claims 1 - 7, in which the drive control loop has a current controller (62) for controlling an electric current (Iq) of a drive motor (32) and an upstream rotational speed controller (64) whose output (i_q_soll*) is connected to the input of the current controller (62), the drive setpoint (i_q*) forming the input of the current controller (62).

**9.** Method according to Claim 8, in which the feedforward setpoint (i_q_vor*) is switched to the output (i_q_soll*) of the rotational speed controller (64) in such a way that the drive setpoint (i_q*) is formed by the sum of the output (i_q_soll*) of the rotational speed controller (64) and of the feedforward setpoint (i_q_vor*).

**10.** Method according to one of Claims 1 - 9, in which the feedforward setpoint (i_q_vor*) has a load feedforward value (i_q_Last*) and an acceleration feedforward value (i_q_a*), the acceleration feedforward value (i_q_a*) of the load (LMS) of a riding car (12) of the lift system (10).

**11.** Method according to one of Claims 1 - 10, in which for the purpose of automatically determining the feedforward parameters (k1, k2, k3, m, O) the feedforward setpoint (i_q_vor*) is estimated in accordance with the following formula:

$$i\_q\_est^* = (xK - xM/2) \cdot c1 + aK \cdot c2 + 1 \cdot c3,$$

i_q_est* being an estimate of the feedforward setpoint (i_q_vor*)
xK being the current riding car position
aK being the current riding car acceleration
xM being the maximum riding car position
c1 being a first calculation parameter
c2 being a second calculation parameter
c3 being a third calculation parameter.

**12.** Method according to Claim 11, in which the first calculation parameter c1 is equal to a first feedforward parameter (k1), the second calculation parameter c2 being a function of a second and a third feedforward parameter (k2, k3), and the third calculation parameter c3 being a function of a fourth and a fifth feedforward parameter (m, O),

**13.** Method according to one of Claims 1 - 12, in which the feedforward parameter (k1, k2, k3, m, 0) is monitored by a monitoring routine during operation of the lift system (10).

**14.** Control device (40) for a lift system (10) having a control loop (60) for a drive (30) of a lift system (10), in particular for an electric motor drive (30), the control loop (60) having a drive control loop (62) and a feedforward control (70) which prescribes a feedforward setpoint (i_q_vor*) for the drive control loop (62), the feedforward setpoint (i_q_vor*) being a function of at least one measurable variable (xK, LMS, a*) of the lift system (10) and of at least one adjustable feedforward parameter (k1, k2, k3, m, O), the feedforward parameter (k1, k2, k3, m, O) being set by means of the method according to one of Claims 1 - 13.

**15.** Lift system (10) having a riding car (12) and a drive (30) which is controlled by a control loop (60) of a control device (40) according to Claim 14.

**Revendications**

**1.** Procédé de réglage d'un circuit de régulation (60) pour un mécanisme d'entraînement (30) d'un système élévateur (10), notamment pour un mécanisme d'entraînement électromotorisé (30), le circuit de régulation (60) présentant un circuit de régulation d'entraînement (62) et une commande pilote (70), laquelle prédéfinit une valeur de consigne de commande pilote (i_q_vor*) pour le circuit de régulation d'entraînement (62), la valeur de consigne de commande pilote (i_q_vor*) étant une fonction d'au moins une variable mesurable (xK, LMS, a*) du système élévateur (10) et d'au moins un paramètre de commande pilote (k1, k2, k3, m, O) réglable,
**caractérisé en ce que**
le paramètre de commande pilote (k1, k2, k3, m, O) est réglé automatiquement lors de la mise en service du système élévateur (10) et/ou pendant le fonctionnement du système élévateur (10) au moyen d'un procécé de minimisation des erreurs (76) par le biais duquel une erreur (e) entre la valeur de consigne de commande pilote (i_q_vor*) et une valeur de consigne d'entraînement (i_q*) pilotée par la valeur de consigne de commande pilote (i_q_vor*) est minimisée pendant une course de mise en service et/ou pendant une course de service.

2. Procédé selon la revendication 1, selon lequel, pendant la course de mise en service et/ou la course de service, est réalisée une pluralité de mesures successives de la valeur de consigne de commande pilote (i_q_vor*) et de la valeur de consigne d'entraînement (i_q*) ainsi que de la variable (xK, LMS, a*) et selon lequel le procédé de minimisation des erreurs est mis en oeuvre en s'appuyant sur les mesures.

3. Procédé selon la revendication 1 ou 2, selon lequel le procédé de minimisation des erreurs est un procédé des moindres carrés.

4. Procédé selon l'une des revendications 1 à 3, selon lequel une pluralité de paramètres de commande pilote (k1, k2, k3, m, O) est réglée automatiquement.

5. Procédé selon l'une des revendications 1 à 4, selon lequel, pendant une course de mise en service, un premier paramètre de commande pilote (k1) qui paramètre une charge de câble est réglé automatiquement.

6. Procédé selon l'une des revendications 1 à 5, selon lequel, pendant une course de mise en service, un deuxième paramètre de commande pilote (k2) qui paramètre un moment d'inertie ($J_s$) du système élévateur (10) est réglé automatiquement.

7. Procédé selon l'une des revendications 1 à 6, selon lequel, pendant une course supplémentaire lors de laquelle le chargement (LMS) d'une cabine d'ascenseur (12) du système élévateur (10) est différent en comparaison d'une course de mise en service, un troisième paramètre de commande pilote (k3) qui paramètre le moment d'inertie provoqué par le chargement (LMS) est réglé et/ou un quatrième paramètre de commande pilote (m) qui paramètre une charge de chargement est réglé.

8. Procédé selon l'une des revendications 1 à 7, selon lequel le circuit de régulation d'entraînement possède un régulateur de courant (62) servant à la régulation d'un courant électrique (Iq) d'un moteur d'entraînement (32) ainsi qu'un régulateur de vitesse de rotation (64) branché en amont, dont la sortie (i_q_soll*) est reliée avec l'entrée du régulateur de courant (62), la valeur de consigne d'entraînement (i_q*) formant l'entrée du régulateur de courant (62).

9. Procédé selon la revendication 8, selon lequel la valeur de consigne de commande pilote (i_q_vor*) est appliquée à la sortie (i_q_soll*) du régulateur de vitesse de rotation (64) de telle sorte que la valeur de consigne d'entraînement (i_q*) est formée par la somme de la sortie (1_q_soll*) du régulateur de vitesse de rotation (64) et de la valeur de consigne de commande pilote (i_q_vor*).

10. Procédé selon l'une des revendications 1 à 9, selon lequel la valeur de consigne de commande pilote (i_q_vor*) présente une valeur de commande pilote de charge (i_q_Last*) et une valeur de commande pilote d'accélération (i_q_a*), la valeur de commande pilote d'accélération (i_c_a*) étant dépendante du chargement (LMS) d'une canine d'ascenseur (12) du système élévateur (10).

11. Procédé selon l'une des revendications 1 à 10, selon lequel, en vue de la détermination automatique des paramètres de commande pilote (k1, k2, k3, m, O), la valeur de consigne de commande pilote (i_q_vor*) est estimée selon la formule suivante :

$$i\_q\_est* = (xK - xM/2).c1 + aK.c2 + 1.c3,$$

où

i_q_est* : estimation de la valeur de consigne de commande pilote (i_q_vor*),

xK : position actuelle de la cabine d'ascenseur,

aK : accélération actuelle de la cabine d'ascenseur, xM : position maximale de la cabine d'ascenseur,

c1 : premier paramètre de calcul,

c2 : deuxième paramètre de calcul,

c3 : troisième parcmètre de calcul.

12. Procédé selon la revendication 11, selon lequel le premier paramètre de calcul c1 est égal à une premier paramètre de commande pilote (k1), selon lequel le deuxième paramètre de calcul c2 est une fonction d'un deuxième et d'un troisième paramètre de commande pilote (k2, k3), et selon lequel le troisième paramètre de calcul c3 est une fonction d'un quatrième et d'un cinquième paramètre de commande pilote (m, O).

13. Procédé selon l'une des revendications 1 à 12, selon lequel le paramètre de commande pilote (k1, k2, k3, m, O) est surveillé par une routine de surveillante pendant le fonctionnement du système élévateur (10).

14. Dispositif de commande (40) pour un système élévateur (10), comprenant un circuit de régulation (60) pour un mécanisme d'entraînement (30) d'un système élévateur (10), notamment pour un mécanisme d'entrainement électromotorisé (30), le circuit de régulation (60) présentant un circuit de régulation d'entraînement (62) et une commande pilote (70), laquelle prédéfinit une valeur de consigne de commande pilote (i_q_vor*) pour le circuit de régulation d'entraînement (62), la valeur de consigne de commande pilote (i_q_vor*) étant une fonction d'au moins une variable mesurable (xK, LMS, a*) du système élévateur (10) et d'au moins un paramètre de commande pilote (k1, k2, k3, m, O) réglable, le paramètre de commande pilote (k1, k2, k3, m, O) étant réglé au moyen du procédé selon l'une des revendications 1 à 13.

15. Système élévateur (10) comprenant une cabine d'ascenseur (12) et un mécanisme d'entraînement (30), lequel est régulé avec un circuit de régulation (60) d'un dispositif de commande (40) selon la revendication 14.

Fig.1

Fig.2

Fig.3

Fig.4

Fig.5

Fig.6

Fig.7

Fig.8

80

Standardwerte für Parameter (k1, k2, k3, m, 0) oder alle 0 — S1

Auslesen von LMS aus Lastmesssensor — S2

Öffnung Bremse — S3

Algorithmus schätzt c1, c2, c3 während der gesamten Fahrt — S4

Schließung Bremse — S5

Speichere LMS, c1, c2, c3 in Tabelle — S6

S7 — Weniger als 2 unterschiedliche LMS-Werte in Tabelle? — JA → Annäherung Lastausgleich = 60% — S8

Speichere temporär LMS = 50% und c3 = 0 — S9

Berechne m, 0 mit mindestens 2 Wertepaaren (LMS, c3) durch Gleichung $m*LMS + 0 = c3$ — S10

Berechne k1 aus mindestens einem Wert c1 durch Gleichung $k1 = c1$ — S11

S12 — Weniger als 2 unterschiedliche LMS-Werte in Tabelle? — JA → Setze k3 = 0 berechne k2 aus mindestens einem Wert c2 durch Gleichung $k2 = c2$ — S13

Berechne k2, k3 mit mindestens 2 Wertepaaren (LMS, c2) durch Gleichung: $k2 + LMS*k3 = c2$ — S14

Ersetzen der alten Parameter (k1, k2, k3, m, 0) durch die neuen — S15

Nächste Fahrt — S16

Fig.9

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 4940117 A
- US 4754850 A
- US 4380275 A
- US 4793442 A
- US 4623041 A
- US 4939679 A
- US 5172782 A
- US 5343003 A
- US 5531294 A
- EP 0936730 A2

- US 5880416 A
- US 5929400 A
- US 5157228 A
- US 5407030 A
- EP 1885640 B1
- EP 2345615 A1
- WO 2010055555 A
- DE 10361788 A1
- EP 0884264 A1